# EUROPEAN PATENT APPLICATION

(11) **EP 2 991 314 A1**
(43) Date of publication of application: **02.03.2016**
(21) Application number: 14306310.5
(22) Date of filing: 25.08.2014
(51) Int. Cl.: H04L 29/08, H04L 29/06, H04W 4/00, H04W 8/20, H04W 8/24, H04W 12/02, H04L 9/08

(54) **Method and first device for loading an application**

(71) Applicant: Gemalto SA, 92190 Meudon (FR)
(72) Inventor: Bretagne Eric, 13881 GEMENOS (FR); Amiel, Patrice, 13881 GEMENOS (FR); Pico, Richard, 13881 GEMENOS (FR)

(57) **Abstract**

The invention relates to a method 20 for loading an application.

According to the invention, the application is to be loaded from a first device 12 to at least one fleet of at least two second devices 18, 130. During an off-line preparation phase 200, a first device generates 22 a set of at least one key, as a generic keyset, the first device generates 24 an application loading script and secures 26 the application loading script by using the generic keyset. A corresponding first result is a secured generic script. The secured generic script is valid for the at least one second device fleet. The first device stores 28 at least one couple comprising the generic keyset and the secured generic script. During a pre-loading phase 210, the first device generates 212 a keyset loading script and secures 214 the keyset loading script by using at least one specific key relating to a second device, as a second device keyset. A corresponding second result is a secured first specific script. The secured first specific script is valid only for the second device. The first device generates 216 a whole script by appending the secured generic script to the secured first specific script. And, during a loading phase, the first device sends 218 to the second device the whole script.

The invention also pertains to a corresponding first device.

## Description

### Field of the invention:

The invention relates generally to a method for loading an application.

The present invention is notably applicable to a mobile radio-communication field in which an application server, as a first device, downloads to a fleet of chips, as second devices, an application.

A chip may be either an embedded chip, such as an embedded Universal Integrated Circuit Card (or eUICC), or a chip included within a smart card termed Subscriber Identity Module (or SIM) type card or the like, as a Secure Element (or SE).

Within the present description, an SE is a smart object that, on the one hand, protects physically access to data that the smart object stores and, on the other hand, is intended to communicate with the outside world.

Moreover, the invention also pertains to a first device for loading an application.

### State of the art:

As known per se, an application server stores, in a ciphered manner, an application, as an Executable Load File (or ELF) ciphered by using a storage key. The storage key is unique and valid for all the chips of a fleet to be updated. The application server downloads the ELF to the chip fleet in a secure manner by using a specific transport keyset that is valid for each targeted chip.

However, prior to downloading the ELF, the application server has firstly to decipher and secondly to secure the ELF by providing confidentiality through a data ciphering and providing integrity through a digital signature generation. Such security operations are very time consuming. The security operations are carried out by several Hardware Security Modules (or HSMs) which are not suitable to process a huge quantity of data (typically, to date, up to tens of kBytes).

There is a need to provide a solution that allows reducing a time necessary for an application server to prepare a downloading of an application to a fleet of SEs while remaining secure.

The invention proposes a solution for satisfying the just herein above specified need by providing a method for loading an application.

According to the invention, the application is to be loaded from a first device to at least one fleet of at least two second devices. The method comprises the following steps. During an off-line preparation phase, a first device generates a set of at least one key, as a generic keyset, the first device generates an application loading script and secures the application loading script by using the generic keyset. A corresponding first result is a secured generic script. The secured generic script is valid for the at least one second device fleet. The first device stores at least one couple comprising the generic keyset and the secured generic script. During a pre-loading phase, the first device generates a keyset loading script and secures the keyset loading script by using at least one specific key relating to a second device, as a second device keyset. A corresponding second result is a secured first specific script. The secured first specific script is valid only for the second device. The first device generates a whole script by appending the secured generic script to the secured first specific script. And, during a loading phase, the first device sends to the second device the whole script.

The principle of the invention consists in that a first device, prior to transmitting an application to a fleet(s) of second devices, prepares data, for each concerned fleet, by generating, firstly, one or several keys, as a generic keyset, and, secondly, an application loading script. The application loading script is further secured by using the generic keyset. A secured application loading script, as a secured generic script, is thus obtained. Then, the first device registers an association of the generic keyset with the secured generic script. And, only when applicable, i.e. on demand, the first device further generates data, for each targeted second device, a keyset loading script. The keyset loading script is also secured by using one or several keys relating to the concerned second device, as a specific keyset. A secured keyset loading script, as a secured specific script, is thus obtained. The first device concatenates the secured specific script and the secured generic script to create a whole script to be transmitted.

The generic script allows loading to all the second devices of a fleet an application.

It is noteworthy that the generic script is produced only once for the concerned fleet(s) without waiting for any particular request. Furthermore, the generic script is not specific to any concerned second device but common to all the concerned second devices.

Thus, irrespective of the number of the second devices that are comprised within a fleet(s) to be addressed, the generic script is produced in an anticipated and common manner to all the second devices of all the concerned fleet(s).

It is also to be noted that a specific script is produced once for each second device. Moreover, the specific script is specific to each individual concerned second device.

The specific script allows loading to each concerned second device the generic keyset.

Contrary to the known previously described solution in which all the prepared data is specific to each concerned addressee, the invention solution allows reducing a processing time by preparing, in an anticipated manner, data to be transmitted by producing a generic script. The generic script, as data common to all the concerned addressees, is the greatest part of the data to be transmitted to all the concerned second devices. The generic script, as a common data part, is completed by a specific script, as a small specific data part for each concerned second device to be addressed.

Due to such an efficient data processing at the first device side, the number of the needed resources for processing data, like HSMs, may be greatly reduced.

The invention solution has therefore high performance.

The invention solution is secure since the generic script and the specific script are both secured. More exactly, the generic script is secured by using the generated generic keyset while the specific script is secured by using a keyset specific to the concerned second device.

According to a further aspect, the invention is a first device for loading an application.

According to the invention, the application is to be loaded from the first device to at least one fleet of at least two second devices. The first device is configured to, during an off-line preparation phase, generate a set of at least one key, as a generic keyset, generate an application loading script and secure the application loading script by using the generic keyset. A corresponding first result is a secured generic script. The secured generic script is valid for the at least one second device fleet. The first device is configured to, during the off-line preparation phase, store at least one couple comprising the generic keyset and the secured generic script. The first device is configured to, during a pre-loading phase, generate a keyset loading script and secure the keyset loading script by using at least one specific key relating to a second device, as a second device keyset. A corresponding second result is a secured first specific script. The secured first specific script is valid only for the second device. The first device is configured to, during the pre-loading phase, generate a whole script by appending the secured generic script to the secured first specific script. And the first device is configured to, during a loading phase, to send to the second device the whole script.

It shall be noted that the first device may be any kind of communicating device, like a server, a terminal, a user terminal or an SE.

### Brief description of the drawings:

Additional features and advantages of the invention will be more clearly understandable after reading a detailed description of one preferred embodiment of the invention, given as an indicative and non-limitative example, in conjunction with the following drawings:

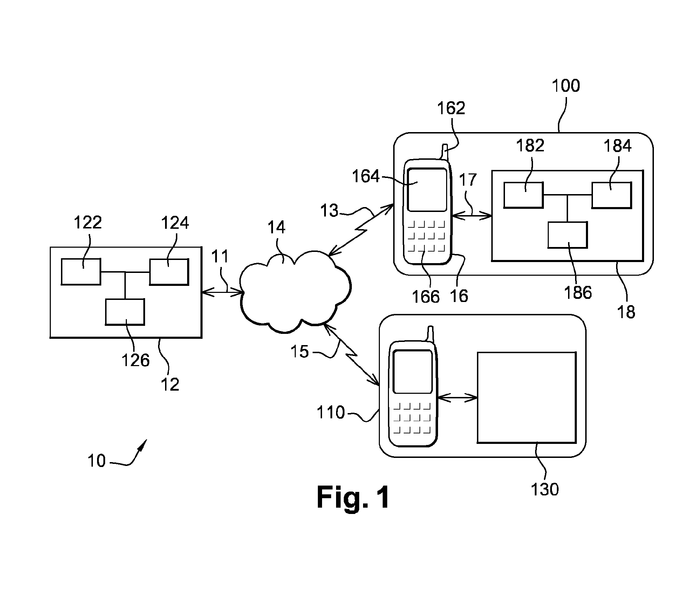

- Figure 1 illustrates a simplified diagram including a remote server that is connected to a fleet of eUICCs, the server being arranged to prepare off-line a generic keyset and an application loading script that is secured by using the keyset, then, to generate a keyset loading script that is secured by using a key(s) specific to an eUICC to be addressed, and to link the secured specific and generic scripts to be transmitted to the eUICC, according to the invention; and

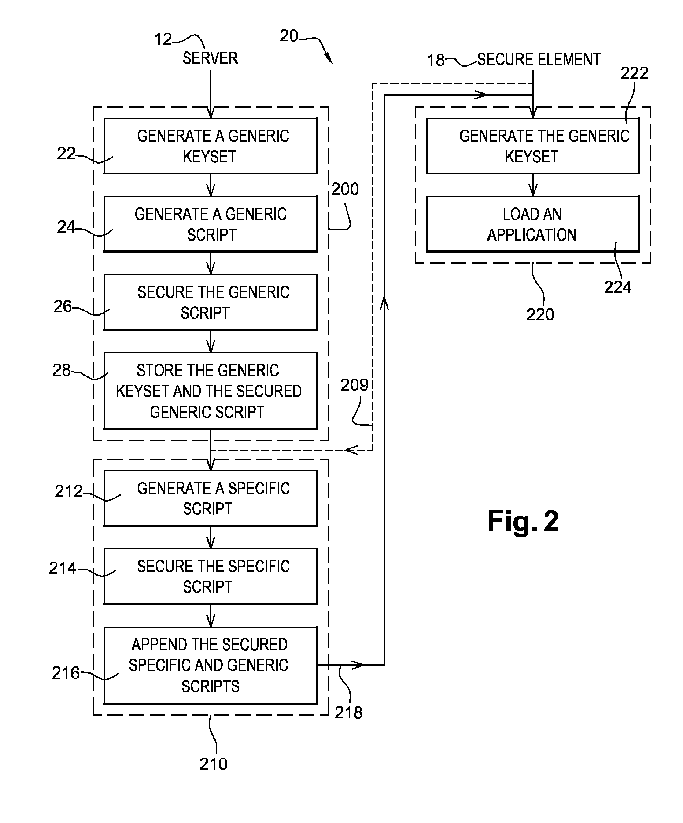

- Figure 2 represents a flow chart of an exemplifying method for loading an application implemented by the remote server and the concerned eUICC of figure 1.

### Detailed description:

Herein under is considered a case in which the invention method for loading an application is implemented by a remote server, as a first device, and a fleet of eUICCs, as SEs and second devices that are each hosted within a terminal.

According to another embodiment (not represented), the second devices are terminals, as standalone entities. In other words, each second device does not cooperate with any local device, so as to load an application.

Naturally, the herein below described embodiment is only for exemplifying purposes and is not considered to reduce the scope of the invention.

**Figure 1** shows schematically a remote server 12, as a first device, that is connected, through a communication network(s) 14, to a fleet of eUICCs to be updated.

Each eUICC is included within a mobile equipment.

Each mobile equipment includes a mobile phone, as a user terminal, and an eUICC, as a chip and a second device to be updated.

Instead of being embedded, the chip may be included within a smart card or another medium, as an SE.

The invention does not impose any constraint as to a kind of the SE type. As removable SE, it may be a smart card, a SIM type card, a Secure Removable Module (or SRM), a smart dongle of the USB (acronym for "Universal Serial Bus") type, a (micro-)Secure Digital (or SD) type card, a Multi-Media type Card (or MMC) or a medium of any other format that is to be coupled to a host device.

For the sake of simplicity, the remote server 12, the communication network(s) 14, a mobile equipment, a mobile phone and a eUICC are termed herein after the server 12, the network 14, the equipment, the phone and the SE respectively.

The phone is used for accessing the network 14.

Instead of a phone, it may be any other device (not represented) including means for processing data, comprising or being connected to communication means for exchanging data with the server 12, and comprising or being connected to means for storing data.

Instead of the phone, the SE host device may be, for instance, e.g. a Machine-to-Machine (or M2M) controller, a set-up box, a desktop computer, a laptop computer, a Personal Computer (or PC), a media-player, a game console, a tablet, a netbook, a handset and/or a Personal Digital Assistance (or PDA).

Only one server 12 is connected, through the network 14, to two SEs 18 and 130 are represented for a clarity reason.

However, the server 12 may be connected, indirectly via one or several servers, to the SEs. The network 14 may include several networks, like e.g. an Over-The-Air (or OTA), an Over-The-Internet (or OTI) and/or Over The Cloud (or OTC) networks. Likewise, the fleet of SEs may include more than two SEs.

The server 12 is e.g. an application server, like a Trusted Service Manager (or TSM) or an OTA platform that provides executable data relating to either a non-sensitive application or a sensitive application in terms of security.

Alternately or additionally, the server 12 is e.g. a data server that provides non-executable.

The server 12 is identified by a Uniform Resource Identifier (or URI), like e.g. an Uniform Resource Locator (or URL), an Internet Protocol (or IP) address or the like, as an identifier relating to the server.

The server 12 is hosted by a computer.

The server 12 may be operated by a Mobile radio-communication Network Operator (or MNO), a Mobile Virtual Network Operator (or MVNO), a service provider or on its behalf.

The server 12 includes a microprocessor(s) 122, as data processing means, comprises and/or is connected to a memory(ies) 124, as data storing means, and one or several Input/Output (or I/O) interfaces 126.

According to a preferred embodiment, the server 12 comprises or is coupled or connected to one or several HSMs (not represented). Each HSM stores, manages (digital) keys and provides, in a secure manner, one or several crypto-processing services.

The server 12 supports, according to the invention, an application for managing a database and communicating data of the database to outside.

The database includes an SE set in which each SE is identified by one (or several) identifier(s) that is(are) associated with data that are ready for being sent to the concerned SE, when applicable.

The database includes preferably for each SE within the SE set one or several keys, as a specific keyset, that are specific to the concerned SE, like e.g. a key for ciphering data, a key for signing data to be sent and a key for ciphering a key(s) to be sent.

The SE identifier(s) include(s) a Mobile Subscriber Integrated Services Digital network Number (or MSISDN) and/or a URI. The MSISDN is used for identifying a mobile radio-communication network subscriber and routing a call or data to the concerned subscriber. The URI, as a name of a web resource and an SE identifier, is used for identifying a subscriber SE.

The SE identifier(s) allow(s) accessing the concerned SE from the server 12.

The database includes an ELF relating to e.g. a Near Field Communication (or NFC) banking application, as a sensitive application, to be loaded for a part of or all the SE set, namely only the SEs which are eligible to receive and support the application. The application ELF may be ciphered by using a storage key.

The server 12 is connected preferably, through a bi-directional wire link 11, to the network 14.

The server 12 is able to receive a request for sending to an identified SE data. Such a request comprises one or several identifiers relating to the SE. The SE identifier(s) allow(s) addressing the concerned SE. A sender of the request may be either the concerned SE or another entity, as a third device, from which the request originates. The third device may relay, as request response, one or several messages comprising data that originates from the server 12 to a managed SE, as a recipient or addressee identified within the received request while keeping the message content and possibly adding an identifier relating to the SE to be thus addressed.

The network 14 may include a Global System for Mobile communications (or GSM), a General Packet Radio Service (or GPRS), a Universal Mobile Telecommunications System (or UMTS), a UTRAN (acronym for "UMTS Terrestrial Radio Access Network"), an EDGE (acronym for "Enhanced Data Rates for GSM Evolution"), a Code Division Multiple Access (or CDMA) and/or a Long Term Evolution (or LTE) type network(s).

Such a network set is not exhaustive but only for exemplifying purposes.

The network 14 may comprise or be connected to an Internet type network (not represented).

The network 14 may include a Short Message Service Center (or SMS-C) or the like, as a relay entity, between the server 12 and an SE. The SMS-C is able to receive SMS messages, to store the received SMS messages, to forward the received SMS messages to its or their specified addressees.

The network 14 is connected to a plurality of equipments. More exactly, the network is connected, over a bi-directional wireless first 13 and a second link 15, to a first 100 and a second equipment 110 respectively.

Within the present description, the adjective "wireless" denotes notably that the communication means communicates via one or several Long Range (or LR) RadioFrequency (or RF) links.

The LR RF may be fixed at several hundreds of MHz, e.g. around 850, 900, 1800, 1900 and/or 2100 MHz.

The first equipment 100 includes a first phone 16 and a first SE 18.

As to the first phone 16, it may be any device including means (not represented) for processing data, comprising or being connected to a first antenna 162 for sending to and/or receiving, through a wireless link, data from outside, comprising or being connected to means for interfacing with a user, as Man Machine Interface (or MMI), like a display screen 164 and a keyboard 166, a loudspeaker (not represented) and comprising or being connected to means (not represented) for storing data.

A phone microprocessor, as data processing means, processes data originating from an internal component or an external entity, like e.g. the server 12 or the first SE 18.

A phone memory(ies), as data storing means, may comprise one or several volatile memories and one and/or several non-volatile memories.

The phone memory stores data, like user data.

The phone memory stores an Operating System (or OS) and one or several applications to be executed by the phone microprocessor. As supported applications, there is one or several communication applications for communicating with external devices, like e.g. an APDU, an SMS an email, an HyperText Transfer Protocol (or HTTP), an HTTP Secure (or HTTPS) type message communication application and/or the like.

The phone MMI allows a phone user to interact with the first phone 16, the first SE 18 or the server 12.

The phone plays, in a preferential manner, a role of a modulator-demodulator (or modem) for the first SE 18.

The phone is able to exchange data, in a distant manner, with any entity connected to the network 14, like the server 12.

The first phone I/O interfaces include one or several I/O interfaces for exchanging data with the first SE 18.

The first phone 16 is preferably coupled or connected, over a bi-directional contact or contact-less link 17, to the first SE 18.

The first SE 18 belongs to a user.

The first SE 18 is under control of the phone microprocessor.

According to a particular embodiment, the first SE 18, as an embedded SE, is soldered to a Printed Circuit Board (or PCB) of the first phone 16.

According to another embodiment, the phone I/O interface with the first SE 18 is an International Organization for Standardization (or ISO) 7816 interface, as contact interface, when the first SE 18, as a non-embedded SE, is inserted, in a removable manner, within the first phone 16.

Alternately, instead of a contact interface, the phone I/O interface with the first SE 18, as a non-embedded SE, is connected to or includes a Contact-Less (or CL) interface.

The first phone 16 may be connected to or includes means for communicating data while using preferably a Short Range (or SR) RF link. The SR RF link may be related to any technology that allows the first phone 16 to exchange data, through a CL link, with an external device, like e.g. a terminal (not represented). The SR RF may be related to an NFC type communication technology.

The first SE 18 includes a microprocessor(s) 182, as data processing means, a memory(ies) 184, as data storing means, and one or several I/O interfaces 186 that are internally all connected, through an internal bidirectional data bus 183, to each other.

The I/O interface(s) 186 allow(s) communicating data from the internal SE components to the SE exterior and conversely.

The microprocessor 182 processes, controls and communicates internally data with all the other components incorporated within the chip and, through the I/O interface(s) 186, with the chip exterior.

The microprocessor 182 executes or runs one or several applications.

As applications, there are several applications for communicating with one or several external devices, like the first phone 16 and the server 12.

The microprocessor 182 is preferably able to initiate actions, in order to interact directly with the outside world, in an independent manner of the first phone 16, as an SE host device. Such a capacity of interaction at the initiative of the first SE 18 is also known as proactive capacity. According to one preferred embodiment, the first SE 18 is able to use a SIM ToolKit (or STK) type command, as a proactive command to be sent to the first phone 16.

The first SE 18 is thus able to send, at its (own) initiative, through the first phone 16, to any device connected to this latter data by using a proactive command for sending a message to the concerned device to be addressed. The device may be included within or connected to the network 14. The message may be an SMS, an email, an HTTP, an HTTPS type message or the like, that includes a request for sending an (identified) application into the first SE 18.

A first SE 18 identifier is added, within a message originating from the first SE 18, prior to sending the message to an addressed device, by a network entity, such as a Visitor Location Register (or VLR) (not represented), a Home Subscriber Server (or HSS) (not represented) or the like.

The HSS (or VLR), as network entity, manages a database that includes information relating to a subscription to the IMS network. The HSS is able to provide routing information, like e.g. Internet Protocol (or IP) information, allowing to reach the first SE 18, as a destination device.

The first SE identifier allows addressing the first SE 18 from outside.

The microprocessor 182 executes, in a preferred manner, one or several security functions.

The security functions include preferably a user authentication process to be used prior to continuing an execution of an application that may be executed by the first phone 16 or the first SE 18. To authenticate the user, the user has to provide a Personal Identity Number (or PIN) or biometric data, as user reference data, that is securely stored within the first SE memory 184.

The memory 184 stores an OS. The memory 184 stores preferably one or several SIM type applications and data relating to one or several subscriptions to one or several networks. The SIM type application(s) allow(s) the first phone 16 to identify and authenticate to the network 14.

The memory 184 stores one or several keys that are specific to the first SE 18, like e.g. a key for ciphering data, a key for signing data to be sent and a key for ciphering a key(s) to be sent.

The memory 184 stores one or several applications that the microprocessor 182 executes.

The memory 184 stores preferably data relating to a URI, a URL and/or an Internet Protocol (or IP) address of an external entity to be addressed, like the server 12, as an interlocutor device.

**Figure 2** depicts an exemplary embodiment of a flow chart of a method 20 for loading an application from the server 12 to the first SE 18, as a particular SE of the concerned SE fleet to be provided with the application.

In the described example, it is assumed that the server 12 is an application provider.

It is assumed that the server 12 exchanges with the first phone 16, as SE host device, by using an SMS, a Transmission Control Protocol Internet Protocol (or TCP/IP) or a User Datagram Protocol Internet Protocol (or UDP/IP) type communication protocol.

It is also assumed that the server 12 exchanges with the first SE 18 by using APDU, an SMS, a Card Application Toolkit Transport Protocol (or CAT-TP) over UDP/IP or a Remote Applet Management (or RAM) over HTTP over TCP/IP type protocol. The server 12 exchanges with the first SE 18, by using a secured data communication protocol (securing in sender authentication, confidentiality and/or in integrity the data thus exchanged), like e.g. a Secure Channel Protocol (or SCP) SCP02, SCP03, SCP11, SCP80 or SCP81, is preferably used.

However, any other data communication protocol between the server 12 and the first SE 18 may be used.

During an off-line preparation phase 200, the server 12 generates 22 a set of one or several keys, as a generic keyset. To generate a key, the server 12 uses a predetermined algorithm, like e.g. a (pseudo-)random (or a derived) generation algorithm. The generic keyset may include a key for ciphering data to be sent, a key for signing data to be sent and/or a key for deciphering one or several keys. The generic keyset may include e.g. an SCP02, SCP03, SCP11, SCP80 or SCP81 type keyset.

The off-line preparation phase 200 is carried out preferably when the server 12 has a low activity, as a background task.

Advantageously, the server 12 carries out the off-line preparation phase 200 only once for all the concerned SE fleet(s).

During the off-line preparation phase 200, the server 12 generates 24 an application loading script, as a generic script.

The application loading script allows loading, when executed, the application.

The application loading script includes one or several commands, like e.g. Application Protocol Data Unit (or APDU) commands, for loading the ELF.

The application loading script includes a command for loading data, like e.g. "Install for Load", several "Load APDUs", and "Install for Install" commands. The application loading script allows, once a corresponding addressee (amongst a plurality of addressees) executes it, to load the concerned application.

The application loading script may include a command for instantiating the application, like e.g. a "Install For Install" command. Once a corresponding addressee executes such a command, the concerned SE instantiates the concerned application.

The generic script is not linked to any specific SE.

During the off-line preparation phase 200, the server 12 secures 26 the application loading script by using the (generated) generic keyset.

A corresponding first result is a secured generic script, i.e. the generic script is signed, ciphered and/or protected in integrity. The secured generic script is valid for all the concerned SE fleet(s). The secured generic script may include a secure channel setup, e.g. "Initialize Update" and "External Authenticate" commands, and the application loading script.

Optionally, during the off-line preparation phase 200 or a pre-loading phase 210, the server 12 generates (not represented) a keyset deletion script. The keyset deletion script allows, when executed, deleting the (generated) generic keyset. The keyset deletion script includes a command for deleting a generated key(s), like e.g. a "Delete Key" command. The keyset deletion command may be also added at the end of the generic script during the generic script generation.

During the off-line preparation phase 200, the server 12 stores 28 one (or several) couple(s) that comprises the generic keyset and the (associated) secured generic script and, optionally, the keyset deletion script. Prior to storing the couple, the server 12 ciphers preferentially the generic keyset by using a storage key, so as to protect access to it and keep its confidentiality.

The off-line preparation phase 200 is carried out by the server 12 in an advanced manner, i.e. without waiting for any sending (or loading) request originating preferably from an SE (to be updated).

The server 12 may need e.g. 1 s to carry out the off-line preparation phase 200 for an application of e.g. 64 ko per SE fleet of e.g. from several thousand up to several millions of SEs.

Then, the server 12 receives from the first SE 18 a message 209, like an SMS type message, that includes a request for sending (or loading) an (identified) application before carrying out a pre-loading 210 and a loading 218 phase for the first SE 18, as indicated infra.

Alternately, i.e. instead of waiting for a sending request originating from the first SE 18, the server 12 executes on either a server user demand, like a Customer Care Agent, or an operator back-end request, the pre-loading 210 and the loading 218 phase for the first SE 18.

The server 12 carries out the pre-loading phase 210 once for each concerned SE in an independent and separated manner with respect to the off-line preparation phase.

During a pre-loading phase 210, the server 12 selects, amongst several stored couples, a couple that comprises a (generated) generic keyset and an associated (generated) secured generic script for the first SE 18, as the concerned SE. Such a couple selection is not statically allocated to a particular SE amongst the SEs of the fleet to be updated.

During the pre-loading phase 210, the server 12 generates 212 a keyset loading script, as a first specific script.

The keyset loading script allows, when executed by a targeted SE, creating the generic keyset at the SE.

During the pre-loading phase 210, the server 12 secures 214 the keyset loading script by using one (or several) specific key(s) relating to the first SE 18, as a first SE 18 keyset, like e.g. a key for ciphering data, a key for signing data to be sent and/or a key for ciphering a key(s) to be sent. The first SE 18 keyset is also stored at the first SE 18.

A corresponding second result is a secured first specific script, i.e. the first specific script is signed, ciphered and/or protected in integrity.

The secured first specific script is valid only for the first SE 18.

Optionally, during the pre-loading phase 210, the server 12 secures (not represented) the keyset deletion script by using one (or several) specific key(s) relating to the first SE 18, as an SE 18 keyset, like e.g. a key for ciphering data, a key for signing data to be sent and/or a key for ciphering a key(s) to be sent. A corresponding third result is a secured second specific script. The secured second specific script is valid only for the targeted first SE 18.

During the pre-loading phase 210, the server 12 generates 216 a whole script by appending the secured generic script to the secured first specific script.

Optionally, during the pre-loading phase 210, the server 12 appends the secured second specific script to the whole script to generate a resulting whole script.

The server 12 may need e.g. about 20 ms to 80 ms to carry out the pre-loading phase 210 per SE.

During a loading phase, the server 12 sends 218 to the first SE 18 the whole script.

To send the script(s), the server 18 may use an SMS type message(s) that includes an SMS type Mobile Terminated (or MT) with Transfer Protocol User Data (or TP-UD), as the useful payload to be transferred. The TP-UD includes applicative data to be processed by an application stored by the first SE 18. The applicative data includes the whole script that is possibly completed by the secured second specific script.

Once the first SE 18 receives the whole script that is possibly completed by the secured second specific script, the first SE 18 carries out a script execution phase 220.

After one or several preferable security operations, namely a data deciphering of the secured first specific script by using a deciphering key stored by the first SE 18, a sender authentication, a signature verification and/or a verification of data integrity, the first SE 18 firstly generates 222 the generic keyset by executing the keyset loading script.

The first SE 18 implements preferably an anti-replay mechanism under the server 12 control while executing the keyset loading script.

The first SE 18 stores the generic keyset.

After one or several preferable security operations, namely a data deciphering of the secured generic script by using the generic keyset, a sender authentication, a signature verification and/or a verification of data integrity, the first SE 18 then loads 224 the application by executing the application loading script.

Optionally, when the first SE 18 also receives the secured second specific script, after one or several preferable securiyty operations, namely a data deciphering of the secured second specific script by using a deciphering key stored by the first SE 18, a sender authentication, a signature verification and/or a verification of data integrity, the first SE 18 deletes (not represented) the stored generic keyset by executing the keyset deletion script. Thus, no trace of the generic keyset is left in the first SE memory 184, so as to prevent from accessing the generic keyset.

Optionally, the first SE 18 sends (not represented) to the server 12 a message, like e.g. an SMS-Mobile Originated (or MO) (Proof Of Receipt (or PoR) with Automatic Delivery Report (or ADR), including an acknowledgement of receipt of the SMS type messages along with data relating to a result relating to an execution of the received whole script.

The invention solution allows managing efficiently a data processing at the server 12 side by greatly reducing the required data processing time, e.g. about 20-80 ms instead of 1 s.

The invention solution allows using much less resources, like e.g. HSMs, than with the previously described prior art solution. For example, an OTA server that processes e.g. 300 loading requests per second only 6 HSMs are needed instead of 300 HSMs by using the prior art solution.

The server 12, as first device, may absorb a very high number of loading peaks.

The invention solution allows securing strongly the specific and generic scripts.

The embodiment that has just been described is not intended to limit the scope of the concerned invention. Other embodiments may be given. As another embodiment example, instead of exchanging, over a network 14, with a fleet of SEs, the server exchanges direcly, over a CL link, with a fleet of phones, as user terminals.

## Claims

1. A method for loading an application,
**characterized in that**, the application being to be loaded from a first device (12) to at least one fleet of at least two second devices (18, 130), the method comprises the following steps:
during an off-line preparation phase (200),
- a first device generates (22) a set of at least one key, as a generic keyset;
- the first device generates (24) an application loading script and secures (26) the application loading script by using the generic keyset, a corresponding first result being a secured generic script, the secured generic script being valid for the at least one second device fleet;
- the first device stores (28) at least one couple comprising the generic keyset and the secured generic script;
during a pre-loading phase (210),
- the first device generates (212) a keyset loading script and secures (214) the keyset loading script by using at least one specific key relating to a second device, as a second device keyset, a corresponding second result being a secured first specific script, the secured first specific script being valid only for the second device;
- the first device generates (216) a whole script by appending the secured generic script to the secured first specific script; and
during a loading phase, the first device sends (218) to the second device the whole script.

2. Method according to claim 1, wherein the second device generates (222) the generic keyset by executing the first specific script and then loads (224) the application by executing the generic script and using the generic keyset.

3. Method according to claim 1 or 2, wherein the second device implements an anti-replay mechanism under the first device control.

4. Method according to claim 2 or 3, wherein the first device generates, during either the off-line preparation phase or the pre-loading phase, a keyset deletion script and secures, during the pre-loading phase, the keyset deletion script by using the at least one specific key relating to the second device, a corresponding third result being a secured second specific script, the secured second specific script being valid only for the second device, the keyset deletion script allowing, when executed, to delete the generic keyset and the first device appends the keyset deletion script to the whole script.

5. Method according to any previous claim, wherein the first device carries out the off-line preparation phase only once for the at least one fleet of at least two second devices and then carries out the pre-loading phase only once for each second device in an independent and separated manner with respect to the off-line preparation phase.

6. Method according to any previous claim, wherein the application loading script includes a command for instantiating the application.

7. Method according to any previous claim, wherein the keyset loading script includes a command for generating the generic keyset.

8. Method according to any previous claim, wherein the generic keyset includes at least one element of a group comprising:
- a Secure Channel Protocol 02 type keyset;
- a Secure Channel Protocol 03 type keyset;
- a Secure Channel Protocol 11 type keyset;
- a Secure Channel Protocol 80 type keyset; and
- a Secure Channel Protocol 81 type keyset.

9. Method according to any previous claim, wherein the first device and the second device exchange data by using at least one element of a group comprising:
- APDU;
- an SMS type protocol;
- a CAT-TP over UDP/IP; and
- a RAM over HTTP over TCP/IP.

10. A first device (12) for loading an application,
**characterized in that**, the application being to be loaded from the first device to at least one fleet of at least two second devices (18, 130), the first device is configured to:
during an off-line preparation phase (200),
- generate (22) a set of at least one key, as a generic keyset;
- generate (24) an application loading script and secure (26) the application loading script by using the generic keyset, a corresponding first result being a secured generic script, the secured generic script being valid for the at least one second device fleet;
- store (28) at least one couple comprising the generic keyset and the secured generic script;
during a pre-loading phase (210),
- generate (212) a keyset loading script and secure (214) the keyset loading script by using at least one specific key relating to a second device, as a second device keyset, a corresponding second result being a secured first specific script, the secured first specific script being valid only for the second device;
- generate a whole script by appending (216) the secured generic script to the secured first specific script; and
during a loading phase, send (218) to the second device the whole script.
